# EUROPEAN PATENT APPLICATION

(11) **EP 4 752 465 A1**
(43) Date of publication of application: **03.06.2026**
(21) Application number: 24825363.5
(22) Date of filing: 19.08.2024
(51) Int. Cl.: F25B 41/35, F16K 31/50, F16K 1/36, F16K 1/48, F16K 31/06, F16K 1/32

(54) **ELECTRONIC EXPANSION VALVE**

(30) Priority: 19.06.2023 CN 202321595997 U; 30.11.2023 CN 202311636878; 30.11.2023 CN 202323281194 U; 30.11.2023 CN 202323281205 U; 30.11.2023 CN 202323267306 U
(71) Applicant: Zhejiang Dunan Artificial Environment Co., Ltd., Shaoxing Zhejiang 311835 (CN)
(72) Inventor: YANG, Zhongyu, Shaoxing, Zhejiang 311835 (CN); CAI, Peiyu, Shaoxing, Zhejiang 311835 (CN); CHAI, Huilian, Shaoxing, Zhejiang 311835 (CN)
(74) Representative: Meyer-Dulheuer MD Legal Patentanwälte PartG mbB
(86) International application number: PCT/CN2024/113194
(87) International publication number: WO 2024/260479

(57) **Abstract**

An electronic expansion valve is provided. The electronic expansion valve includes a rotor assembly (100), a screw rod (200), a valve core assembly (300), and a valve seat assembly (400). The valve core assembly (300) is movable relative to the valve seat assembly (400) along an axial direction of the screw rod (200). The rotor assembly (100) is connected to the screw rod (200). The screw rod (200) is connected to the valve core assembly (300). The valve core assembly (300) is movable relative to the valve seat assembly (400) along an axial direction of the screw rod (200). The valve core assembly (300) includes a sliding fit member (310) and a valve needle assembly (320). The sliding fit member (310) includes a main body portion (314) and a connecting portion (315). The main body portion (314) is configured as an injection-molded member, and the connecting portion (315) is configured as a metal member. One end of the connecting portion (315) is fixedly connected to the main body portion (314), and another end of the connecting portion (315) is connected to the valve needle assembly (320).

## Description

### CROSS-REFERENCE TO RELATED APPLICATIONS

This application claims priority to Chinese patent application No. 202323281194.0, filed on November 30, 2023, and titled "ELECTRONIC EXPANSION VALVE", Chinese patent application No. 202321595997.0, filed on June 19, 2023, and titled "ELECTRONIC EXPANSION VALVE", Chinese patent application No. 202311636878.X, filed on November 30, 2023, and titled "ELECTRONIC EXPANSION VALVE", Chinese patent application No. 202323267306.7, filed on November 30, 2023, and titled "ELECTRONIC EXPANSION VALVE", and Chinese patent application No. 202323281205.5, filed on November 30, 2023, and titled "ELECTRONIC EXPANSION VALVE". The contents of the above identified applications are hereby incorporated herein in their entireties by reference.

### TECHNICAL FIELD

The present application relates to the technical field of valve bodies, and in particular, to an electronic expansion valve.

### BACKGROUND

In an existing electronic expansion valve, an up-and-down movement of a valve core is generally achieved by relative spiral motion between a nut member and a screw rod. In addition, the valve core is typically fixedly connected by the screw rod, which means that one screw rod can only fix one specification of valve core. That is, it is impossible for one screw rod to be universally applicable to various valve cores of different specifications.

### SUMMARY

According to various embodiments of the present application, an electronic expansion valve is provided to solve the problem of low connection strength between the screw rod and the valve core.

The present application provides an electronic expansion valve. The electronic expansion valve includes a rotor assembly, a screw rod, a valve core assembly, and a valve seat assembly. The valve core assembly is movable relative to the valve seat assembly along an axial direction of the screw rod. The rotor assembly is connected to the screw rod, and the screw rod is connected to the valve core assembly. The valve core assembly is movable relative to the valve seat assembly along an axial direction of the screw rod. The valve core assembly includes a sliding fit member and a valve needle assembly. The sliding fit member includes a main body portion and a connecting portion, The main body portion is configured as an injection-molded member, and the connecting portion is configured as a metal member. One end of the connecting portion is fixedly connected to the main body portion, and another end of the connecting portion is connected to the valve needle assembly.

Compared to the related art, the same sliding fit member can match with valve needle assemblies of different specifications. That is, it is only necessary to manufacture one sliding fit member, which can be adapted to valve needle assemblies of different specifications.

In addition, the main body portion is the injection-molded member, which can significantly reduce a weight of the sliding fit member and reduce the difficulty of processing the sliding fit member. The connecting portion is the metal member, which facilitates the welding of the valve needle assembly to the sliding fit member via the connecting portion, thereby improving the connection strength between the sliding fit member and the valve needle assembly.

Details of one or more embodiments of the present application are presented in the attached drawings and descriptions below. Other features, purposes, and advantages of the present application will become apparent from the description, drawings and claims.

### BRIEF DESCRIPTION OF THE DRAWINGS

For a better description and illustration of embodiments and/or examples of the present application herein, reference may be made to one or more attached drawings. Additional details or examples used to describe the drawings should not be considered as limiting the scope of any of the present application, currently described embodiments and/or examples, and currently understood best modes of the present application.
FIG. 1 is a schematic partial structural view of an electronic expansion valve according to an embodiment of the present application.
FIG. 2 is a cross-sectional view of an electronic expansion valve according to an embodiment of the present application.
FIG. 3 is a cross-sectional view of an electronic expansion valve according to another embodiment of the present application.
FIG. 4 is a schematic structural view of a sliding fit member of an electronic expansion valve according to another embodiment of the present application.
FIG. 5 is a schematic partial structural view of an electronic expansion valve according to an embodiment of the present application.
FIG. 6 is a cross-sectional view of an electronic expansion valve according to another embodiment of the present application.

In the drawings, 100 represents a rotor assembly; 200 represents a screw rod; 300 represents a valve core assembly; 310 represents a sliding fit member; 311 represents an anti-rotation protrusion; 314 represents a main body portion; 3141 represents a snap-fitting groove; 3142 represents a first snap groove; 3143 represents a limiting protrusion; 3144 represents a second snap groove; 315 represents a connecting portion; 3151 represents a cylindrical body; 3152 represents a flange; 3153 represents a limiting snap groove; 320 represents a valve needle assembly; 321 represents a first valve needle; 3221 represents a regulating valve port; 322 represents a second valve needle; 3222 represents a movable cavity; 3223 represents a first core body; 3224 represents a second core body; 3225 represents a first passage; 3226 represents a communication groove; 3227 represents a communication hole; 323 represents a buffer gasket; 3231 represents a through hole; 324 represents an annular assembly groove; 3241 represents an elastic sealing ring; 400 represents a valve seat assembly; 410 represents a valve port portion; 420 represents a valve cavity; 510 represents a stop seat; 5101 represents an outer guide rail portion; 511 represents an outer guide rail portion; 512 represents a stop body; 513 represents a first connection insert; 514 represents a second connection insert; 515 represents a guide groove; 520 represents a stop ring; 521 represents a movable ring main body; 522 represents a stop head; 523 represents a first head portion; 524 represents a second head portion; 530 represents a guide rod; 540 represents a first stopper portion; 541 represents an annular fixing ring; 542 represents a stopper rib; 550 represents a second stopper portion; 600 represents a driving mechanism; and 800 represents a housing.

### DETAILED DESCRIPTION

In the description of the present application, it should be understood that orientations or positional relationships indicated by terms such as "center", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial", and "circumferential" are based on the orientations or positional relationships shown in the drawings, which are merely for the convenience of describing the present application and simplifying the description, and do not indicate or imply that the referred apparatus or element must have a specific orientation, be constructed and operated in a specific orientation, and thus cannot be understood as a limitation on the present application.

In addition, terms such as "first" and "second" are merely used for descriptive purposes, and cannot be understood as indicating or implying relative importance or implicitly indicating the quantity of the technical features referred to. Thus, a feature defined with "first" and "second" may explicitly or implicitly include at least one of features. In the description of the present application, "a plurality of" means at least two, for example, two, three, and the like, unless specifically defined otherwise.

In the present application, unless otherwise specified and defined, terms such as "mounted", "connected", "coupling", and "fixed" should be understood broadly, for example, may be a fixed connection, a detachable connection, or an integral connection; a mechanical connection, or an electrical connection; a direct connection, or an indirect connection through an intermediate medium; or an internal communication between two elements or an interaction relationship between two elements, unless otherwise specified. For those skilled in the art, specific meanings of the foregoing terms in the present application may be understood according to specific situations.

In the present application, unless otherwise explicitly specified and defined, a first feature being "on" or "under" a second feature may refer to the first feature and the second feature being in direct contact, or in indirect contact through an intermediary. Also, when the first feature is described as "on", "above", and "over" the second feature, this may mean the first feature is directly above or obliquely above the second feature, or merely indicate that the first feature is horizontally higher than the second feature. When the first feature is described as "under", "below", and "beneath" the second feature, this may mean the first feature is directly below or obliquely below the second feature, or merely indicate that the first feature is horizontally lower than the second feature.

It should be noted that when an element is referred to as being "fixed to" or "provided on" another element, the element may be directly on the another element or an intermediate element may also exist. When an element is considered as being "connected to" another element, the element may be directly connected to the another element or an intermediate element may also exist at the same time. Terms such as "vertical", "horizontal", "upper", "lower", "left", "right" and other similar expressions used in the description of the present application are only for the purpose of illustration and do not represent the unique implementation.

Unless otherwise defined, all technical and scientific terms used herein have the same meaning as commonly understood by one of ordinary skill in the art to which the present application belongs. The terms used herein in the description of the present application are for the purpose of describing specific embodiments only, and are not intended to limit the present application. As used herein, the term "and/or" means any and all combinations of one or more of the associated listed items.

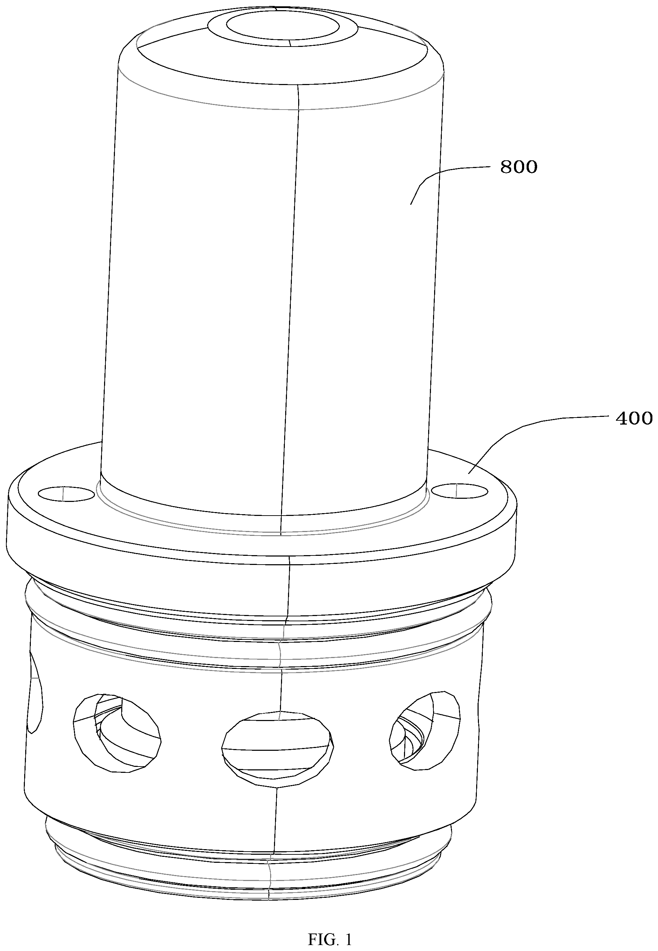

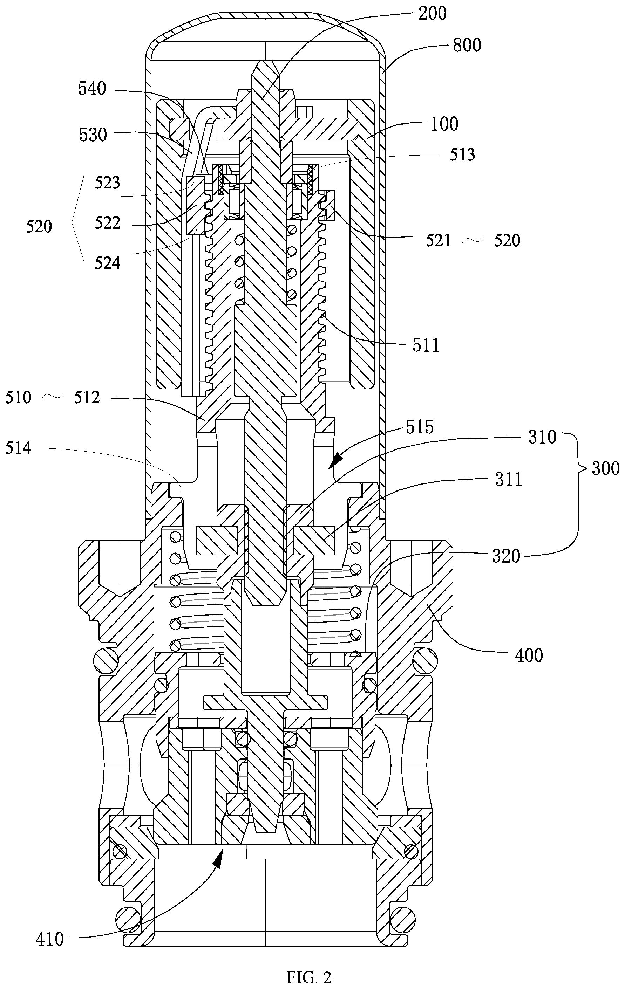

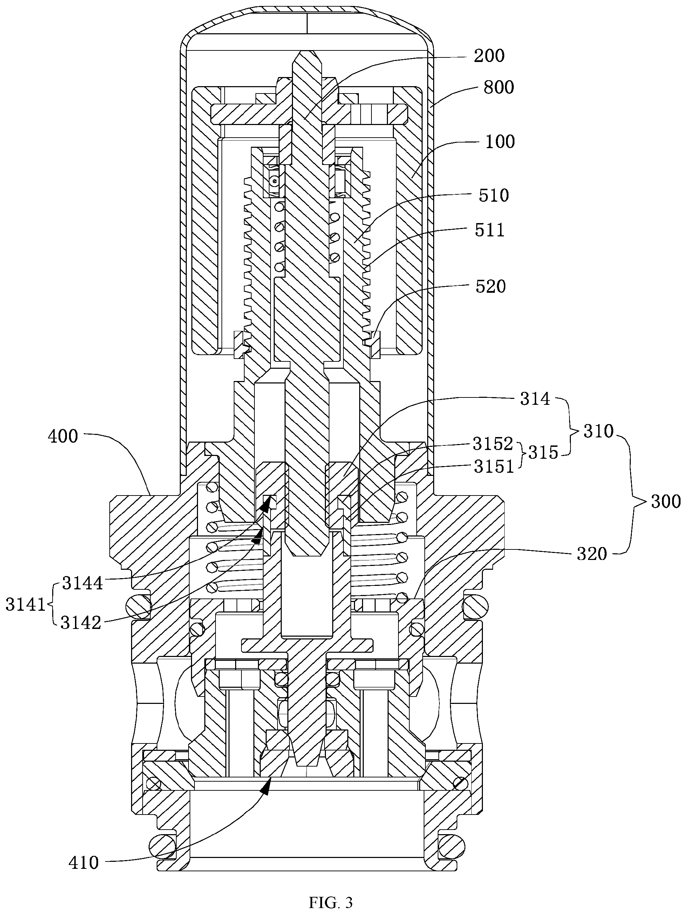

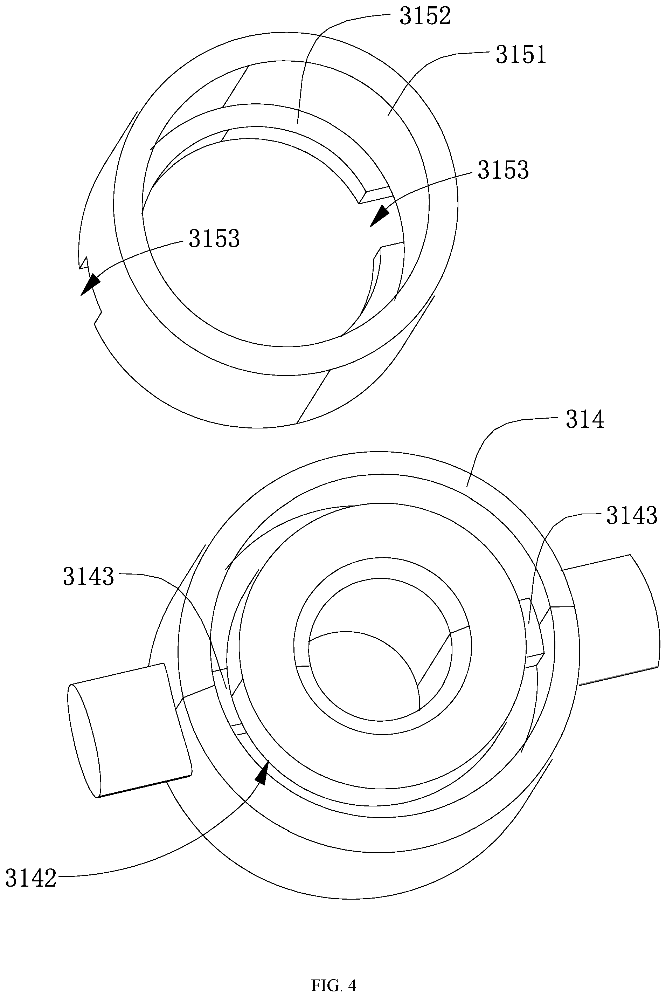

Referring to FIG. 1 to FIG. 4, an electronic expansion valve includes a rotor assembly 100, a screw rod 200, a valve core assembly 300, and a valve seat assembly 400. The valve seat assembly 400 may be provided with a valve port portion 410. The valve core assembly 300 is movable relative to the valve seat assembly 400 along an axial direction of the screw rod 200. One end of the screw rod 200 may be fixedly connected to the rotor assembly 100, and another end of the screw rod 200 may be connected to the valve core assembly 300. In addition, the rotor assembly 100 may be configured to drive the valve core assembly 300 to move towards or away from the valve port portion 410 via the screw rod 200.

Specifically, the electronic expansion valve may further include a stop seat 510, a stop ring 520, and a guide rod 530. The stop seat 510 may be fixedly connected to an end of the valve seat assembly 400 away from the valve port portion 410, and the stop seat 510 may be disposed on an outer periphery of the screw rod 200. A peripheral side of the stop seat 510 facing away from the screw rod 200 may be provided with an outer guide rail portion 511. The stop ring 520 may be sleeved on the outer periphery of the stop seat 510 and in movable threaded engagement with the outer guide rail portion 511. The guide rod 530 may be fixedly connected to the rotor assembly 100 or the screw rod 200, such that the rotor assembly 100 may be configured to drive the guide rod 530 to push the stop ring 520 to move spirally along the outer guide rail portion 511. Moreover, the screw rod 200 and the valve core assembly 300 may be in movable threaded engagement.

The valve core assembly 300 includes a sliding fit member 310 and a valve needle assembly 320. One end of the screw rod 200 away from the rotor assembly 100 may be in threaded engagement with the sliding fit member 310.

Specifically, the sliding fit member 310 and the stop seat 510 may be in sliding engagement along the axial direction of the screw rod 200, such that the screw rod 200 can be configured to drive the sliding fit member 310 to further drive the valve core assembly 300 to open or close the valve port portion 410.

The sliding fit member 310 includes a main body portion 314 and a connecting portion 315. The main body portion 314 is configured as an injection-molded member, and the connecting portion 315 is configured as a metal member. The sliding fit member 310 may be in threaded connection with the screw rod 200 via the main body portion 314. One end of the connecting portion 315 is fixedly connected to the main body portion 314, and another end of the connecting portion 315 is connected to the valve needle assembly 320 by welding.

Since the main body portion 314 is configured as the injection-molded member, a weight of the sliding fit member 310 can be significantly reduced and the difficulty of processing the sliding fit member 310 can be reduced. Since the connecting portion 315 is configured as the metal member, the welding of the valve needle assembly 320 to the sliding fit member 310 via the connecting portion 315 may be facilitated, and the connection strength between the sliding fit member 310 and the valve needle assembly 320 can be improved. Moreover, by this configuration, the same sliding fit member 310 can match with valve needle assemblies 320 of different specifications. That is, only one sliding fit member 310 needs to be manufactured, which can be adapted to the valve needle assemblies 320 of different specifications.

It should be noted that the electronic expansion valve may further include a housing 800. The housing 800 may be configured to accommodate the rotor assembly 100, a part of the screw rod 200, and a part of the valve core assembly 300, and may be connected to the valve seat by welding.

Specifically, the connecting portion 315 may be made of copper, stainless steel, aluminum, or other alloy materials, which are not listed herein.

In an embodiment, the connecting portion 315 may be embedded in the main body portion 314.

In an embodiment, the connecting portion (315) and the main body portion (314) may be an integral structure via injection-molding to form the sliding fit member (310). The connecting portion 315 may be embedded in the main body portion 314 by an integral injection molding process, such that the assembly difficulty of the connecting portion 315 and the main body portion 314 is further reduced, and the connection strength between the connecting portion 315 and the main body portion 314 is improved.

However, the connection method between the connecting portion 315 and the main body portion 314 may not be limited thereto. In other embodiments, the connecting portion 315 may also be connected to the main body portion 314 in a snap-fitting, adhesively bonding, welding, or threading manner.

In an embodiment, the main body portion 314 may be provided with a snap-fitting groove 3141. One end of the connecting portion 315 may be embedded in the snap-fitting groove 3141, and another end of the connecting portion 315 may extend towards the valve needle assembly 320 and may be connected to the valve needle assembly 320 by welding.

In an embodiment, the connecting portion 315 may include a cylindrical body 3151 and a flange 3152. The cylindrical body 3151 and the screw rod 200 may be coaxially arranged. The flange 3152 may be fixedly disposed at one end of the cylindrical body 3151 away from the valve needle assembly 320. One end of the flange 3152 may be connected to an inner wall of the cylindrical body 3151, and another end of the flange 3152 may extend along a radial direction of the cylindrical body 3151 towards an axis of the cylindrical body 3151.

The snap-fitting groove 3141 may include a first snap groove 3142 and a second snap groove 3144. One end of the cylindrical body 3151 may be disposed in the first snap groove 3142, and another end of the cylindrical body 3151 may extend out of the first snap groove 3142 and may be connected to the valve needle assembly 320 by welding. The second snap groove 3144 may be disposed at one end of the first snap groove 3142 away from the valve needle assembly 320. One end of the second snap groove 3144 may be in communication with the first snap groove 3142, and another end of the second snap groove 3144 may extend along the radial direction of the cylindrical body 3151 towards the axis of the cylindrical body 3151, and the flange 3152 is snap-fitted in the second snap groove 3144.

The flange 3152 can be snapped into the second snap groove 3144 by integral injection molding. Specifically, the connecting portion 315 may be placed in a mold, and then liquid plastic may be injected into the mold. After the plastic is solidified and molded, the main body portion 314 covering the connecting portion 315 can be obtained.

With this configuration, under the snap-fitting action of the second snap groove 3144, the flange 3152 cannot move along the axial direction of the cylindrical body 3151. Furthermore, because the flange 3152 is fixedly connected to the cylindrical body 3151, the entire connecting portion 315 cannot be separated from the main body portion 314 along the axial direction of the cylindrical body 3151. Moreover, under the snap-fitting action of the first snap groove 3142, the cylindrical body 3151 cannot move along the radial direction of the cylindrical body 3151. Therefore, it can be seen that the connecting portion 315 can be firmly connected to the main body portion 314.

Specifically, the cylindrical body 3151 and the flange 3152 may be stamped members, turned members, or welded members.

In an embodiment, the first snap groove 3142 may have an annular cross section. Correspondingly, the cylindrical body 3151 may also have an annular cross section.

Thus, the shape adaptability between the connecting portion 315 and the valve needle assembly 320 is improved, and the welding of the sliding fit member 310 and the valve needle assembly 320 is facilitated.

In an embodiment, one end of the first snap groove 3142 away from the valve needle assembly 320 may be provided with a limiting protrusion 3143. The flange 3152 may be provided with a limiting snap groove 3153 corresponding to the limiting protrusion 3143. The limiting protrusion 3143 may be stopped against two opposite sides of the limiting snap groove 3153 along the circumferential direction of the flange 3152.

With this configuration, under the stopping action of the limiting protrusion 3143, the flange 3152 cannot rotate around the axis of the cylindrical body 3151. That is, the entire connecting portion 315 cannot rotate relative to the main body portion 314, avoiding wear between the connecting portion 315 and the main body portion 314. Moreover,the connecting portion 315 cannot be separated from the main body portion 314 along the axial direction of the cylindrical body 3151 and the cylindrical body 3151 cannot move along the radial direction of the cylindrical body 3151. In a word, the connecting portion 315 and the main body portion 314 can be completely fixedly connected.

In an embodiment, the limiting protrusion 3143 may be provided in plural, and the plurality of limiting protrusions 3143 may be evenly distributed along a circumferential direction of the first snap groove 3142.

Specifically, the number of the limiting protrusions 3143 may be two, three, or four, which are not illustrated herein.

It is beneficial for the overall force balance of the sliding fit member 310.

However, the number of the limiting protrusions 3143 may be not limited thereto. In other embodiments, the number of the limiting protrusions 3143 may be one.

In another embodiment, the limiting snap groove 3153 may also pass through the flange 3152 and the cylindrical body 3151 in sequence.

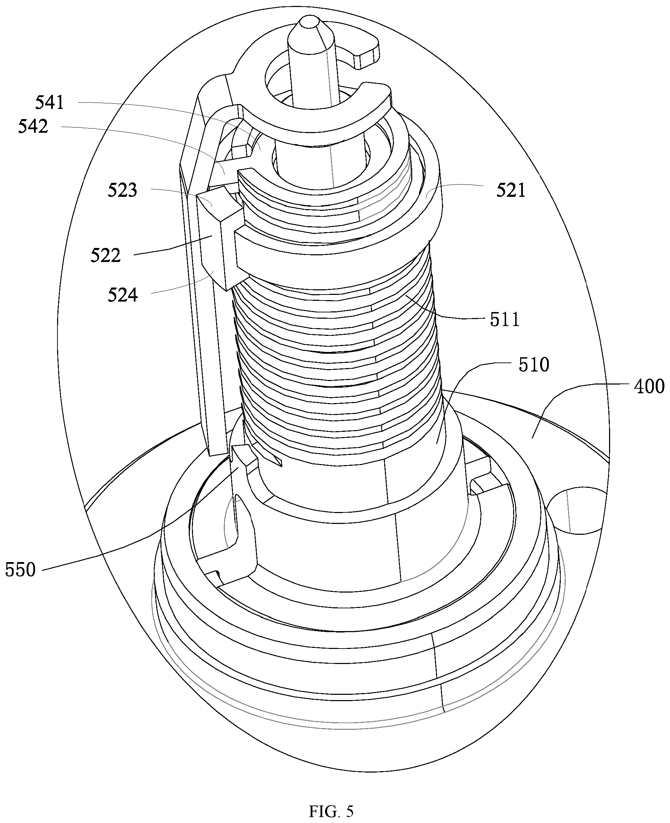

In an embodiment, referring to FIG. 5, one end of the limiting protrusion 3143 may be connected to an outer sidewall of the first snap groove 3142 away from the axis of the cylindrical body 3151, and another end of the limiting protrusion 3143 may extend into the second snap groove 3144 towards the axis of the cylindrical body 3151. In addition, the end of the limiting protrusion 3143 extending into the second snap groove 3144 may abut against a side wall of the second snap groove 3144 proximal to the valve needle assembly 320 and a side wall of the second snap groove 3144 away from the valve needle assembly 320, respectively.

Thus, the portion of the limiting protrusion 3143 extending into the second snap groove 3144 can provide support to the second snap groove 3144 along the axial direction of the cylindrical body 3151, thereby improving the compressive strength of the main body portion 314.

In an embodiment, an end of the cylindrical body 3151 away from the flange 3152 may extend out of the first snap groove 3142.

By such arrangement, it can prevent welding heat from transferring to the main body portion 314 and affecting the structural strength of the main body portion 314 when the cylindrical body 3151 and the valve needle assembly 320 are connected by welding.

Furthermore, in an embodiment, a length by which the cylindrical body 3151 extends out of the first snap groove 3142 may be greater than or equal to 1 mm.

Referring to FIG. 1 to FIG. 5, in an embodiment, the electronic expansion valve may include a stop seat 510, a rotor assembly 100, a screw rod 200, a valve core assembly 300, and a valve seat assembly 400. The stop seat 510 may be fixedly connected to the valve seat assembly 400, and the stop seat 510 may be disposed on an outer periphery of the screw rod 200. The valve seat assembly 400 may be provided with a valve port portion 410. The valve core assembly 300 is movable relative to the valve seat assembly 400 along an axial direction of the screw rod 200. One end of the screw rod 200 may be fixedly connected to the rotor assembly 100, and another end of the screw rod 200 may be connected to the valve core assembly 300. The rotor assembly 100 may be configured to drive the valve core assembly 300 to move towards or away from the valve port portion 410 via the screw rod 200.

Specifically, the electronic expansion valve may further include a stop ring 520 and a guide rod 530. An outer peripheral side of the stop seat 510 facing away from the screw rod 200 may be further provided with an outer guide rail portion. The stop ring 520 may be sleeved on an outer periphery of the stop seat 510 and in movable engagement with the outer guide rail portion. Specifically, the outer guide rail portion may be an outer guide rail portion 511 disposed on the outer peripheral side of the stop seat 510 facing away from the screw rod 200. The stop ring 520 may be sleeved on the outer periphery of the stop seat 510 and in movable threaded engagement with the outer guide rail portion 511. The outer guide rail portion may also be a spiral spring (not shown) spirally wound around outside of the stop seat 510, and the stop ring 520 may move spirally along the extension direction of the spiral spring. The guide rod 530 may be fixedly connected to the rotor assembly 100 or the screw rod 200, such that the rotor assembly 100 may be configured to drive the guide rod 530 to push the stop ring 520 to move spirally along the outer guide rail portion. Moreover, the screw rod 200 and the valve core assembly 300 may be in movable threaded connection with each other.

The valve core assembly 300 includes a sliding fit member 310 and a valve needle assembly 320. One end of the screw rod 200 away from the rotor assembly 100 may be in threaded engagement with the sliding fit member 310. The sliding fit member 310 and the stop seat 510 may be cooperated with each other via a limiting structure, such that the screw rod 200 may be configured to drive the sliding fit member 310 to further drive the valve core assembly 300 to move relative to the stop seat 510 along the axial direction of the screw rod 200, to open or close the valve port portion 410. The limiting structure may be configured to prevent the sliding fit member 310 from rotating relative to the stop seat 510 about an axis of the screw rod 200.

It should be noted that an upper part (a part proximal to the rotor assembly 100) and a lower part (a part for cooperating with the sliding fit member 310) of the stop seat 510 may be formed as an integral structure, or may be designed as separate parts. However, regardless of the form of the upper part and the lower part of the stop seat 510, the stop seat 510 may be fixedly connected to the valve seat assembly (400). By providing the limiting structure, the sliding fit member 310 can be prevented from rotating relative to the stop seat 510 about the axis of the screw rod 200. At this time, the sliding fit member 310 can move relative to the screw rod 200 along the axial direction of the screw rod 200, such that the screw rod 200 may be configured to drive the sliding fit member 310 to further drive the valve core assembly 300 to open or close the valve port portion 410. Thus, the relative rotation between the sliding fit member 310 and the stop seat 510 can be prevented from causing wear between the sliding fit member 310 and the stop seat 510.

It should be noted that the electronic expansion valve may further include a housing 800. The housing 800 may cover and be configured to accommodate the rotor assembly 100, a part of the screw rod 200, and a part of the valve core assembly 300. The housing 800 may be connected to the valve seat assembly 400 by welding.

In this embodiment, a peripheral side of the sliding fit member 310 may be provided with an anti-rotation protrusion 311 extending along a radial direction of the sliding fit member 310. The stop seat 510 may be provided with a guide groove 515 extending along an axial direction of the stop seat 510 corresponding to the anti-rotation protrusion 311. An end of the anti-rotation protrusion 311 away from the sliding fit member 310 may extend into the guide groove 515 and be slidably engaged with the guide groove 515 along the axial direction of the stop seat 510, such that the sliding fit member 310 and the stop seat 510 may be in sliding engagement along the axial direction of the stop seat 510. Moreover, the anti-rotation protrusion 311 and the guide groove 515 may form the limiting structure.

In an embodiment, the anti-rotation protrusion 311 may be provided in plural, and the plurality of anti-rotation protrusions 311 may be evenly distributed along a circumferential direction of the sliding fit member 310. Correspondingly, the guide groove 515 may also be provided in plural, and the plurality of guide grooves 515 may be evenly distributed along a circumferential direction of the stop seat 510. In addition, the guide grooves 515 and the anti-rotation protrusions 311 may be arranged in one-to-one correspondence.

Thus, when the rotation of the anti-rotation protrusion 311 is restricted by a sidewall of the guide groove 515, a circumferential force on the sliding fit member 310 can be uniform, preventing uneven stress at various parts of the sliding fit member 310 from causing deflection that would affect the axial displacement of the sliding fit member 310.

More specifically, each of the number of the anti-rotation protrusions 311 and the number of the guide grooves 515 may be two, three, or four, which are not illustrated herein.

However, the number of the anti-rotation protrusions 311 and the number of the guide grooves 515 are not limited thereto. In other embodiments, the number of the anti-rotation protrusions 311 may be one, such that the structure of the electronic expansion valve is greatly simplified.

In an embodiment, a gap between the anti-rotation protrusion 311 and the sidewall of the guide groove 515 may be less than or equal to 0.1 mm.

It should be noted that each of the guide grooves 515 may have two opposite sidewalls, and a gap between the anti-rotation protrusion 311 and any one of the sidewalls may be less than or equal to 0.1 mm.

Thus, when the anti-rotation protrusion 311 changes its rotational direction, a magnitude of collision amplitude occurs between the anti-rotation protrusion 311 and the sidewall of the guide groove 515 is reduced, thereby decreasing wear between the anti-rotation protrusion 311 and the sidewall of the guide groove 515, and prolonging the service life of the electronic expansion valve.

In an embodiment, the stop seat 510 may be provided with a first stopper portion 540. When the stop ring 520 is stopped by the first stopper portion 540, the valve core assembly 300 and the valve port portion 410 may be spaced apart and stop moving.

In an embodiment, the stop seat 510 may be further provided with a second stopper portion 550. When the stop ring 520 is stopped by the second stopper portion 550, the valve core assembly 300 may abut against the valve port portion 410 and close the valve port portion 410.

By providing the first stopper portion 540 and the second stopper portion 550, the movement stroke of the stop ring 520 on the outer guide rail portion 511 can be effectively limited, thereby limiting a range of a rotation angle of the guide rod 530 relative to the stop seat 510. Since the guide rod 530 is fixedly connected to the rotor assembly 100 or the screw rod 200, a range of the rotation angle of the rotor assembly 100 can be effectively limited, Thus, the movement stroke of the valve core assembly 300 relative to the valve port portion 410 can be controlled, and wear between the valve core assembly 300 and the valve port portion 410 can be prevented. In addition, it is also possible to prevent the stop ring 520 from moving to an area outside the outer guide rail portion 511, which would affect the threaded engagement between the stop ring 520 and the stop seat 510.

In an embodiment, the sliding fit member 310 includes a main body portion 314 and a connecting portion 315. The main body portion 314 is configured as an injection-molded member, and the connecting portion 315 is configured as a metal member. The sliding fit member 310 may be in threaded connection with the screw rod 200 via the main body portion 314. One end of the connecting portion 315 is fixedly connected to the main body portion 314, and another end of the connecting portion 315 is connected to the valve needle assembly 320 by welding.

Since the main body portion 314 is configured as the injection-molded member, a weight of the sliding fit member 310 can be significantly reduced and the difficulty of processing the sliding fit member 310 can be reduced. Since the connecting portion 315 is configured as the metal member, the welding of the valve needle assembly 320 to the sliding fit member 310 via the connecting portion 315 may be facilitated, and the connection strength between the sliding fit member 310 and the valve needle assembly 320 can be improved. Moreover, with this configuration, the same sliding fit member 310 can be matched with valve needle assemblies 320 of different specifications. That is, only one sliding fit member 310 needs to be manufactured, which can be adapted to the valve needle assemblies 320 of different specifications.

Specifically, the connecting portion 315 may be made of copper, stainless steel, aluminum, or other alloy materials, which are not listed herein.

In an embodiment, the connecting portion 315 may be embedded in the main body portion 314.

Specifically, the connecting portion 315 may be embedded in the main body portion 314 by an integral injection molding process, such that the assembly difficulty of the connecting portion 315 and the main body portion 314 is further reduced, and the connection strength between the connecting portion 315 and the main body portion 314 is improved.

However, the connection method between the connecting portion 315 and the main body portion 314 may not be limited thereto. In other embodiments, the connecting portion 315 may also be connected to the main body portion 314 in a snap-fitting, adhesively bonding, welding, or threading manner.

Referring to FIG. 1 to FIG. 6, the present application provides an electronic expansion valve. The electronic expansion valve includes a rotor assembly 100, a screw rod 200, a valve core assembly 300, and a valve seat assembly 400. The valve seat assembly 400 may be provided with a valve port portion 410. The valve core assembly 300 is movable relative to the valve seat assembly 400 along an axial direction of the screw rod 200. One end of the screw rod 200 may be fixedly connected to the rotor assembly 100, and another end of the screw rod 200 may be in threaded connection with the valve core assembly 300. The rotor assembly 100 may be configured to drive the valve core assembly 300 to move towards or away from the valve port portion 410 via the screw rod 200.

The electronic expansion valve may further include a stop seat 510, a stop ring 520, and a guide rod 530. The stop seat 510 may be fixedly connected to the valve seat assembly 400, and the stop seat 510 may be disposed on an outer periphery of the screw rod 200. The stop seat 510 may be provided with a first stopper portion 540. The stop ring 520 may be sleeved on the outer periphery of the stop seat 510. The guide rod 530 may be fixedly connected to the rotor assembly 100 or the screw rod 200, such that the rotor assembly 100 may be configured to drive the guide rod 530 to push the stop ring 520 to move spirally along the stop seat 510. In addition, when the stop ring 520 is stopped by the first stopper portion 540, the valve core assembly 300 and the valve port portion 410 may be spaced apart and stop moving.

Specifically, the screw rod 200 and the valve core assembly 300 may be in movable threaded engagement.

In an embodiment, an outer peripheral side of the stop seat 510 facing away from the screw rod 200 may be further provided with an outer guide rail portion. The stop ring 520 may be sleeved on an outer periphery of the stop seat 510 and in movable engagement with the outer guide rail portion.

In an embodiment, the outer guide rail portion may include an outer guide rail portion 511 disposed on an outer side of the stop seat 510. The stop ring 520 may be sleeved on an outer periphery of the stop seat 510 and in movable threaded engagement with the outer guide rail portion 511. An outer size of the stop seat 510 located at an end of the outer guide rail portion 511 away from the valve port portion 410 may be less than an inner size of the outer guide rail portion 511.

Specifically, a side of the outer guide rail portion 511 away from the valve port portion 410 may be provided with a first stopper portion 540, and a side of the outer guide rail portion 511 proximal to the valve port portion 410 may be provided with a second stopper portion 550. The rotor assembly 100 may be configured to drive the guide rod 530 to push the stop ring 520 to move spirally along the outer guide rail portion 511.

Thus, it is beneficial for the stop ring 520 to be sleeved onto the stop seat 510 located at the end of the outer guide rail portion 511 away from the valve port portion 410 and to be in threaded connection with the outer guide rail portion 511.

However, the configuration of the outer guide rail portion may not be limited thereto. In other embodiments, the outer guide rail portion may further include a spiral guide rail (not shown) sleeved on the stop seat 510. The spiral guide rail may extend spirally, and the stop ring 520 may move spirally along the extension direction of the spiral guide rail.

In an embodiment, the stop seat 510 may be further provided with a second stopper portion 550. When the stop ring 520 is stopped by the second stopper portion 550, the valve core assembly 300 may abut against the valve port portion 410 and close the valve port portion 410.

By providing the first stopper portion 540 and the second stopper portion 550, the movement path of the stop ring 520 on the outer guide rail portion 511 can be effectively limited, thereby limiting a range of a rotation angle of the guide rod 530 relative to the stop seat 510. Since the guide rod 530 is fixedly connected to the rotor assembly 100 or the screw rod 200, the range of the rotation angle of the rotor assembly 100 can be effectively limited, and the movement path of the valve core assembly 300 relative to the valve port portion 410 can be controlled. In addition, wear between the valve core assembly 300 and the valve port portion 410 can also be prevented. Furthermore, it is also possible to prevent the stop ring 520 from moving to an area outside the outer guide rail portion 511, which would affect the threaded engagement between the stop ring 520 and the stop seat 510.

It should be noted that the electronic expansion valve may further include a housing 800. The housing 800 may cover and be configured to accommodate the rotor assembly 100, a part of the screw rod 200, and a part of the valve core assembly 300. The housing 800 may be connected to the valve seat assembly 400 by welding.

In an embodiment, the first stopper portion 540 and the stop seat 510 may be designed as separate parts, and the first stopper portion 540 may be fixedly connected to the stop seat 510.

In an embodiment, one end of the first stopper portion 540 may be connected to the stop seat 510, and another end of the first stopper portion 540 may protrude radially from the stop seat 510 relative to an outer side surface of the stop seat 510. The stop ring 520 can abut against the end of the first stopper portion 540 protruding from the outer side surface of the stop seat 510.

Thus, the assembly difficulty of the first stopper portion 540 is reduced, and assembly firmness between the first stopper portion 540 and the stop seat 510 is improved.

In an embodiment, the first stopper portion 540 may include an annular fixing ring 541 and a stopper rib 542. An inner circumference of the annular fixing ring 541 may surround a peripheral side of the screw rod 200, and an outer circumference of the annular fixing ring 541 may be fixedly connected to an inner wall of the stop seat 510. The stop seat 510 may be provided with a notch corresponding to the stopper rib 542. One end of the stopper rib 542 may be connected to the outer circumference of the annular fixing ring 541, and another end of the stopper rib 542 may pass through the notch along a radial direction of the stop seat 510 and protrude from the outer side surface of the stop seat 510.

The stop ring 520 may include a movable ring main body 521 and a stop head 522. The movable ring main body 521 may be sleeved on the stop seat 510 and connected in threaded engagement with the stop seat 510. One end of the stop head 522 may be connected to the movable ring main body 521, and another end of the stop head 522 may extend along an axial direction of the stop seat 510 away from the valve port portion 410 to form a first head portion 523, such that the first head portion 523 can be cooperated in a stopping manner with the end of the stopper rib 542 protruding from the outer side surface of the stop seat 510.

In this way, during the rotation of the stop ring 520 along the stop seat 510, when the first head portion 523 abuts against the end of the stopper rib 542 protruding from the outer side surface of the stop seat 510, the stop head 522 will be unable to continue rotating under the stopping action of the stopper rib 542, and at this time, the rotor assembly 100 will also stop rotating.

It should be noted that, in an embodiment, the annular fixing ring 541 and the stopper rib 542 may be an integral structure formed by injection-molding.

The configuration of the first stopper portion 540 and the stop seat 510 may not be limited thereto. In other embodiments, the first stopper portion 540 may be directly connected to an outer wall of the stop seat 510. With this configuration, it is beneficial to simplify the structure of the first stopper portion 540 and reduce the processing cost of the electronic expansion valve.

It should be noted that, in an embodiment, the first stopper portion 540 and the stop seat 510 may be designed as separate parts. Specifically, the first stopper portion 540 may be connected to the stop seat 510 in a snap-fitting, welding, adhesively bonding, or threading manner.

In another embodiment, the first stopper portion 540 and the stop seat 510 may be an integral structure formed by injection-molding.

In an embodiment, the stop seat 510 may include a stop body 512 and a first connection insert 513. The stop body 512 may be configured as an injection-molded member, and the first connection insert 513 may be configured as a metal member. The first connection insert 513 may be embedded in the stop body 512. Specifically, the first stopper portion 540 may be configured as a metal member, and the first stopper portion 540 may be connected to the first connection insert 513 by welding.

When processing the stop seat 510, the first connection insert 513 may be first placed at a specified position in an injection mold. Then, liquid plastic may be injected into the injection mold. After the liquid plastic is cooled and molded, the stop body 512 may be obtained, and the first connection insert 513 may also be firmly embedded in the stop body 512.

More specifically, the first connection insert 513 and the first stopper portion 540 may be made of the same type of metal, which is beneficial for welding between the first connection insert 513 and the first stopper portion 540. For example, the first connection insert 513 and the first stopper portion 540 may be made of a copper material, an aluminum material, an iron material, or an alloy material, which are not listed herein.

Since the first stopper portion 540 is configured as the metal member, the structural strength of the first stopper portion 540 is improved, and the first stopper portion 540 is prevented from being broken. Since the stop body 512 is configured as the injection-molded member, the weight of the entire stop seat 510 is reduced. In addition, the first connection insert 513 is configured as the metal member and embedded in the stop body 512, which facilitates the connection of the first stopper portion 540 to the stop body 512 via the first connection insert 513.

However, the connection method between the first stopper portion 540 and the first connection insert 513 may not be limited thereto. In other embodiments, the first stopper portion 540 may also be connected to the first connection insert 513 in a snap-fitting, adhesively bonding, or threading manner.

In another embodiment, each of the stop seat 510 and the first stopper portion 540 may be configured as a metal member, and the first stopper portion 540 may be connected to the stop seat 510 by welding.

In another embodiment, each of the stop seat 510 and the first stopper portion 540 may be configured as an injection-molded member.

In an embodiment, the stop seat 510 may further include a second connection insert 514. The second connection insert 514 may be configured as a metal member and embedded in the stop body 512. The valve seat assembly 400 may be configured as a metal member, and the second connection insert 514 may be connected to the valve seat assembly 400 by welding.

Thus, the connection strength between the stop seat 510 and the valve seat assembly 400 is improved.

In an embodiment, one end of the second stopper portion 550 may be connected to the stop seat 510, and another end of the second stopper portion 550 may protrude radially from the stop seat 510 relative to an outer surface of the stop seat 510. One end of the stop head 522 may be connected to the movable ring main body 521, and another end of the stop head 522 may extend along the axial direction of the stop seat 510 and towards the valve port portion 410 to form a second head portion 524, such that the second head portion 524 can be cooperated in a stopping manner with the end of the second stopper portion 550 protruding from the outer surface of the stop seat 510.

In this way, during the rotation of the stop ring 520 along the stop seat 510, when the second head portion 524 abuts against the end of the second stopper portion 550 protruding from the outer surface of the stop seat 510, the stop head 522 will be unable to continue rotating under the stopping action of the second stopper portion 550, and at this time, the rotor assembly 100 will also stop rotating.

In an embodiment, the stop head 522, the first head portion 523, and the second head portion 524 may be formed as an integral structure. The stop head 522, the first head portion 523, and the second head portion 524 may be injection-molded to form a block-shaped structure.

Furthermore, the movable ring main body 521, the stop head 522, the first head portion 523, and the second head portion 524 may be molded as an integral structure.

In an embodiment, the first stopper portion 540 and the stop seat 510 may be an integral structure formed by injection-molding. Specifically, the first stopper portion 540 may be a protruding structure provided at one end of the stop seat 510.

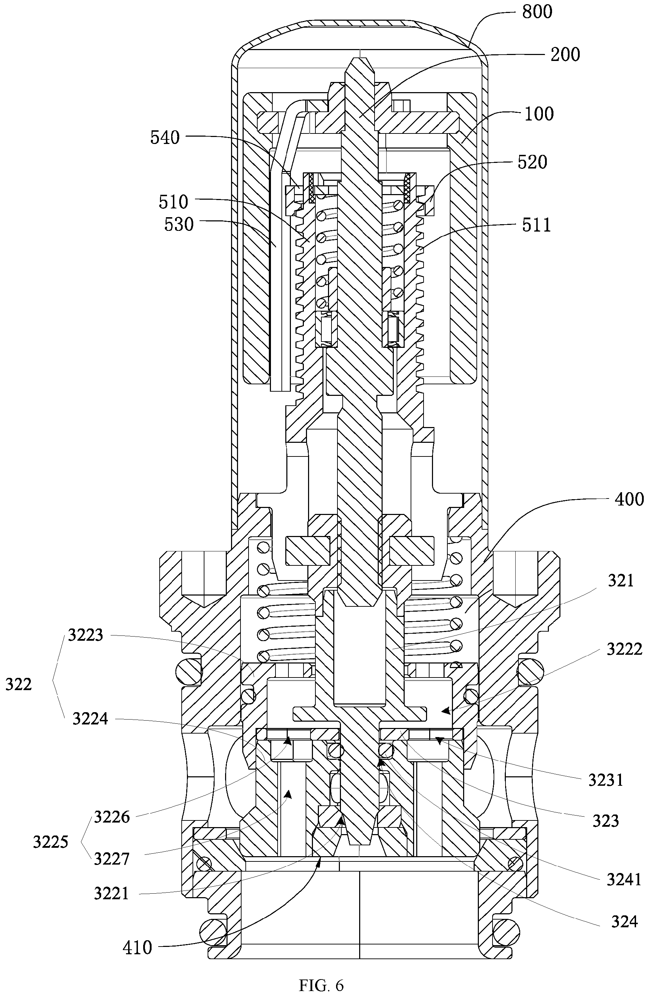

In another embodiment, referring to FIG. 6, the valve core assembly 300 may further includes a first valve needle 321 and a second valve needle 322. An end of the screw rod 200 away from the rotor assembly 100 may be in threaded engagement with the sliding fit member 310. In addition, the sliding fit member 310 and the stop seat 510 may be in sliding engagement along an axial direction of the screw rod 200, such that the screw rod 200 can be configured to drive the sliding fit member 310 to further drive the second valve needle 322 to open or close the valve port portion 410 via the first valve needle 321. The second valve needle 322 may be provided with a regulating valve port 3221 in communication with the valve port portion 410. A flow area of the regulating valve port 3221 may be smaller than that of the valve port portion 410. The screw rod 200 may be configured to drive the sliding fit member 310 to further drive the first valve needle 321 to be in movable engagement with the regulating valve port 3221 to control a liquid inflow amount of the regulating valve port 3221.

Thus, the screw rod 200 may be first rotated along a preset direction to drive the sliding fit member 310 to further drive the first valve needle 321 and the second valve needle 322 to close the valve port portion 410. Subsequently, the screw rod 200 may be rotated along a direction opposite to the preset direction to drive the sliding fit member 310 to further drive the first valve needle 321 to move away from the regulating valve port 3221, thereby achieving fine adjustment of the liquid inflow amount at the regulating valve port 3221.

Furthermore, the electronic expansion valve may further include an elastic sealing ring 3241. The elastic sealing ring 3241 may be sleeved on an outer side of the first valve needle 321 and sandwiched between an outer wall of the first valve needle 321 and an inner wall of the second valve needle 322.

Thus, during the movable cooperation process between the first valve needle 321 and the second valve needle 322, when the second valve needle 322 drives the regulating valve port 3221 to shift, the elastic sealing ring 3241 may be configured to drive the first valve needle 321 to generate a certain swing angle relative to the regulating valve port 3221 via elastic deformation of the elastic sealing ring 3241, thereby achieving centering (i.e., alignment of centers) between the first valve needle 321 and the regulating valve port 3221.

Moreover, the first valve needle 321 and the screw rod 200 may be coaxially arranged. Thus, the coaxiality of the connecting body of the screw rod 200, the sliding fit member 310, and the first valve needle 321 can be improved by providing the first limiting member 220 and the elastic sealing ring 3241, thereby preventing eccentricity of the screw rod 200, the sliding fit member 310, and the first valve needle 321.

In an embodiment, the elastic sealing ring 3241 may be a rubber member or a silicone member.

In an embodiment, the elastic sealing ring 3241 may have a circular (i.e., an O-ring) cross section.

In an embodiment, the inner wall of the second valve needle 322 may be provided with an annular assembly groove 324. The annular assembly groove 324 may surround an axis of the regulating valve port 3221 and may be located on the inner wall of the second valve needle 322. One end of the elastic sealing ring 3241 may be snap-fitted in the annular assembly groove 324, and another end of the elastic sealing ring 3241 may extend out of the annular assembly groove 324 and abut against the outer wall of the first valve needle 321.

In this way, by providing the annular assembly groove 324, the elastic sealing ring 3241 is fixedly disposed on the second valve needle 322, such that the elastic sealing ring 3241 does not move with the first valve needle 321, detachment of the elastic sealing ring 3241 can be prevented.

Referring to FIG. 6, in an embodiment, the second valve needle 322 may include a first core body 3223 and a second core body 3224. The regulating valve port 3221 may be disposed on the second core body 3224. The first core body 3223 may be connected to an end of the second core body 3224 proximal to the sliding fit member 310, and the first core body 3223 and the second core body 3224 may be enclosed to form a movable cavity 3222. Moreover, the second core body 3224 may be provided with a first passage 3225 in communication with the valve port portion 410 and the movable cavity 3222. A side wall of the second core body 3224 may be provided with a second passage (not shown) in communication with the regulating valve port 3221.

Thus, when the valve port portion 410 is closed by the second valve needle 322 and the regulating valve port 3221 is opened, the valve port portion 410 may be in communication with an external pipeline sequentially via the regulating valve port 3221 and the second passage, and an opening degree of the regulating valve port 3221 may be controlled by the first valve needle 321.

In an embodiment, the first passage 3225 may include a communication groove 3226 and a plurality of communication holes 3227. The communication groove 3226 may be in an annular shape, and the valve port portion 410 may be in communication with the movable cavity 3222 sequentially via the plurality of communication holes 3227 and the communication groove 3226. An inner wall of a side of the movable cavity 3222 proximal to the regulating valve port 3221 may be provided with a buffer gasket 323. The elastic sealing ring 3241 may be located between the buffer gasket 323 and the second core body 3224, and the buffer gasket 323 may be located at an open end of the communication groove 3226. Moreover, the buffer gasket 323 may be provided with one or more through holes 3231 in communication with the communication groove 3226 and the movable cavity 3222.

A refrigerant passing through the through hole 3231 may be effectively buffered by the communication groove 3226. Furthermore, by providing the communication groove 3226, the arrangement of the through hole 3231 in the buffer gasket 323 is facilitated, and the through hole 3231 of the buffer gasket 323 does not need to be provided corresponding to the communication hole 3227.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above embodiments only illustrate several implementations of the present application, and the description thereof is specific and detailed, but cannot therefore be understood as limiting the protection scope of the present application. It should be noted that those of ordinary skill in the art may further make variations and improvements without departing from the conception of the present application, and these all fall within the protection scope of the present application. Therefore, the protection scope of the present application should be subjected to the appended claims.

## Claims

1. An electronic expansion valve, **characterized by** comprising a rotor assembly, a screw rod, a valve core assembly, and a valve seat assembly, wherein the rotor assembly is connected to the screw rod, the screw rod is connected to the valve core assembly, and the valve core assembly is movable relative to the valve seat assembly along an axial direction of the screw rod;
the valve core assembly comprises a sliding fit member and a valve needle assembly; and
the sliding fit member comprises a main body portion and a connecting portion, the main body portion is configured as an injection-molded member, the connecting portion is configured as a metal member, one end of the connecting portion is fixedly connected to the main body portion, and another end of the connecting portion is connected to the valve needle assembly.

2. The electronic expansion valve of claim 1, wherein an end of the screw rod away from the rotor assembly is in threaded engagement with the sliding fit member; and the sliding fit member is in threaded connection with the screw rod via the main body portion.

3. The electronic expansion valve of claim 1, wherein the connecting portion and the main body portion are an integral structure via injection-molding to form the sliding fit member.

4. The electronic expansion valve of claim 1, wherein the connecting portion is embedded in the main body portion, the main body portion is provided with a snap-fitting groove, the one end of the connecting portion is embedded in the snap-fitting groove, and the another end of the connecting portion extends towards the valve needle assembly and is connected to the valve needle assembly by welding or snap-fitting.

5. The electronic expansion valve of claim 4, wherein the connecting portion comprises a cylindrical body, and the cylindrical body is coaxially arranged with the screw rod, and
the snap-fitting groove comprises a first snap groove, one end of the cylindrical body is disposed in the first snap groove, and another end of the cylindrical body extends out of the first snap groove and is connected to the valve needle assembly by welding.

6. The electronic expansion valve of claim 5, wherein one end of the first snap groove away from the valve needle assembly is provided with a limiting protrusion, the cylindrical body is provided with a limiting snap groove or a limiting hole corresponding to the limiting protrusion, and the limiting protrusion is located in the limiting snap groove or the limiting hole.

7. The electronic expansion valve of claim 5, wherein the connecting portion further comprises a flange fixedly disposed at one end of the cylindrical body away from the valve needle assembly, one end of the flange is connected to an inner wall of the cylindrical body, and another end of the flange extends along a radial direction of the cylindrical body towards an axis of the cylindrical body; and
the snap-fitting groove further comprises a second snap groove disposed at one end of the first snap groove away from the valve needle assembly, one end of the second snap groove is in communication with the first snap groove, another end of the second snap groove extends along the radial direction of the cylindrical body towards the direction proximal to the axis of the cylindrical body, and the flange is snap-fitted in the second snap groove.

8. The electronic expansion valve of claim 7, wherein one end of the limiting protrusion is located in the first snap groove, another end of the limiting protrusion extends into the second snap groove, and the another end of the limiting protrusion extending into the second snap groove abuts against two opposite sidewalls of the second snap groove.

9. The electronic expansion valve of claim 1, comprising a stop seat, wherein the valve seat assembly is provided with a valve port portion; and
one end of the screw rod away from the rotor assembly is in threaded engagement with the sliding fit member, and the sliding fit member and the stop seat are cooperated with each other via a limiting structure, such that the screw rod is configured to drive the sliding fit member to further drive the valve core assembly to move relative to the stop seat along the axial direction of the screw rod, to open or close the valve port portion, and the limiting structure is configured to prevent the sliding fit member from rotating relative to the stop seat around an axis of the screw rod.

10. The electronic expansion valve of claim 9, wherein a peripheral side of the sliding fit member is provided with an anti-rotation protrusion extending along a radial direction of the sliding fit member, the stop seat is provided with a guide groove extending along an axial direction of the stop seat corresponding to the anti-rotation protrusion, an end of the anti-rotation protrusion away from the sliding fit member extends into the guide groove and is slidably engaged with the guide groove along the axial direction of the stop seat, such that the sliding fit member and the stop seat are in sliding engagement along the axial direction of the stop seat, and the anti-rotation protrusion and the guide groove form the limiting structure.

11. The electronic expansion valve of claim 1, wherein the valve seat assembly is provided with a valve port portion, one end of the screw rod is fixedly connected to the rotor assembly, another end of the screw rod is threadedly connected to the valve core assembly, and the rotor assembly is configured to drive the valve core assembly to move towards or away from the valve port portion via the screw rod; and
the electronic expansion valve further comprises a stop seat, a stop ring, and a guide rod, the stop seat is fixedly connected to the valve seat assembly, the stop seat is disposed on an outer periphery of the screw rod, the stop seat is provided with an outer guide rail portion, the stop ring is sleeved on an outer periphery of the stop seat, and the guide rod is fixedly connected to the rotor assembly or the screw rod, such that the rotor assembly is configured to drive the guide rod to push the stop ring to move spirally along the outer guide rail portion of the stop seat.

12. The electronic expansion valve of claim 11, wherein the stop seat is provided with a first stopper portion, and when the stop ring is stopped by the first stopper portion, the valve core assembly and the valve port portion are spaced apart and stop moving.

13. The electronic expansion valve of claim 12, wherein one end of the first stopper portion is connected to the stop seat, another end of the first stopper portion protrudes from an outer side surface of the stop seat along a radial direction of the stop seat, and the stop ring is configured to abut against the another end of the first stopper portion protruding from the outer side surface of the stop seat.

14. The electronic expansion valve of claim 12, wherein the stop seat is further provided with a second stopper portion, one end of the second stopper portion is connected to the stop seat, and another end of the second stopper portion protrudes from an outer surface of the stop seat along a radial direction of the stop seat; the stop ring and the another end of the second stopper portion protruding from the outer surface of the stop seat are in stopping engagement; and when the stop ring is stopped by the second stopper portion, the valve core assembly abuts against the valve port portion and closes the valve port portion.

15. The electronic expansion valve of claim 14, wherein the first stopper portion, the second stopper portion, and the stop seat are an integral structure via injection-molding.

16. The electronic expansion valve of claim 12, wherein the stop seat comprises a stop body and a first connection insert, the stop body is an injection-molded member, the first connection insert is a metal member, the first connection insert is embedded in the stop body, the first stopper portion is configured as a metal member, and the first stopper portion is connected to the first connection insert by welding.

17. The electronic expansion valve of claim 9, wherein the valve core assembly comprises a first valve needle and a second valve needle, the first valve needle is fixedly connected to the sliding fit member, the screw rod is configured to drive the sliding fit member to further drive the second valve needle via the first valve needle to open or close the valve port portion, the second valve needle is provided with a regulating valve port in communication with the valve port portion, and the first valve needle is configured to seal or open the regulating valve port.

18. The electronic expansion valve of claim 1, further comprising an elastic sealing ring sleeved on an outer side of the first valve needle and sandwiched between an outer wall of the first valve needle and an inner wall of the second valve needle.

19. The electronic expansion valve of claim 18, wherein the inner wall of the second valve needle is provided with an annular assembly groove, the annular assembly groove surrounds an axis of the regulating valve port and is located on the inner wall of the second valve needle, one end of the elastic sealing ring is snap-fitted in the annular assembly groove, and another end of the elastic sealing ring extends out of the annular assembly groove and abuts against the outer wall of the first valve needle.

20. The electronic expansion valve of claim 19, wherein the second valve needle comprises a first core body and a second core body, the second valve needle is provided with a regulating valve port in communication with the valve port portion, the regulating valve port is located in the second core body, the first core body is connected to an end of the second core body proximal to the sliding fit member, and the first core body and the second core body are enclosed to form a movable cavity; and the second core body is provided with a first passage in communication with the valve port portion and the movable cavity.

21. The electronic expansion valve of claim 20, wherein the first passage comprises a communication groove and a plurality of communication holes, the communication groove is in an annular shape, and the valve port portion is in communication with the movable cavity sequentially via the plurality of communication holes and the communication groove; an inner wall of a side of the movable cavity proximal to the regulating valve port is provided with a buffer gasket, the elastic sealing ring is located between the buffer gasket and the second core body, the buffer gasket is located at an open end of the communication groove, and the buffer gasket is provided with one or more through holes in communication with the communication groove and the movable cavity.
